Europäisches Patentamt

European Patent Office

Office européen des brevets

(11) Publication number: **0 240 288 B1**

# EUROPEAN PATENT SPECIFICATION

(45) Date of publication of patent specification: **22.01.92**   (51) Int. Cl.⁵: **G11B  27/19**

(21) Application number: **87302741.1**

(22) Date of filing: **30.03.87**

(54) **Apparatus and methods for tape counting in a rotary head type video signal recording and/or reproducing apparatus.**

(30) Priority: **31.03.86 JP 74060/86**

(43) Date of publication of application:
**07.10.87 Bulletin  87/41**

(45) Publication of the grant of the patent:
**22.01.92 Bulletin  92/04**

(84) Designated Contracting States:
**AT DE FR GB NL**

(56) References cited:
**EP-A- 0 091 202**
**EP-A- 0 100 167**

**PATENT ABSTRACTS OF JAPAN, vol. 12, no. 185 (p-710)**

**PATENT ABSTRACTS OF JAPAN, vol. 5, no. 115 (p-072)**

(73) Proprietor: **SONY CORPORATION**
**7-35 Kitashinagawa 6-Chome Shinagawa-ku Tokyo 141(JP)**

(72) Inventor: **Ikeda, Tamon c/o Patents Division Sony Corp.**
**6-7-35 Kitashinagawa**
**Shinagawa-ku Tokyo 141(JP)**
Inventor: **Otsu, Yosuke c/o Patents Division Sony Corp.**
**6-7-35 Kitashinagawa**
**Shinagawa-ku Tokyo 141(JP)**
Inventor: **Yamamoto, Kikuo c/o Patents Division Sony Corp.**
**6-7-35 Kitashinagawa**
**Shinagawa-ku Tokyo 141(JP)**

(74) Representative: **Thomas, Christopher Hugo et al**
**D Young & Co 10 Staple Inn**
**London WC1V 7RD(GB)**

## Description

This invention relates to apparatus and methods for tape counting in a rotary head type video signal recording and/or reproducing apparatus (VTR).

In earlier VTRs, to measure the amount of tape run during use, control signals which have been recorded on the tape for each frame period along the tape length are counted. The count value is then converted to time and is displayed in units of hours, minutes and seconds.

Recently 8 mm VTRs which use tapes of 8 mm width have appeared. Each of four pilot signals (f1 to f4) having mutually different frequencies are sequentially recorded in each tape track in these VTRs. The pilot signals are used to perform an accurate tracking operation known as automatic track finding (ATF).

Since the above-mentioned control signals are not recorded if the ATF method is adopted, the above tape counter cannot be used. Hence, a light reflecting member is provided on a reel hub or reel drive of the 8 mm VTR, and the number of rotations of the reel is optically detected using the light reflecting member. The amount of tape run is then displayed, for example, as a four-digit numerical representation. However, since the amount of tape run per revolution of the reel differs depending on the wrap diameter of the tape on the reel, an accurate display cannot be achieved.

According to the present invention there is provided a tape counter for counting the amount of tape run in a video signal recording and/or reproducing apparatus having different playback modes, the tape counter comprising: an envelope detector for producing an envelope signal of a reproduced frequency modulated signal derived from at least one rotary head mounted on a rotary drum of said apparatus; a pulse signal generator for generating a pulse signal in dependence on the level of the envelope signal produced by said envelope detector; first means for counting the number of revolutions per unit time of the rotary head on the basis of an RF switching signal derived by said apparatus; and second means for correcting a count value derived by said first means on the basis of the pulse signal generated by said pulse signal generator in dependence on the relationship between the tape speed in a respective playback mode and a normal tape speed, so that the amount of tape run is counted.

According to the present invention there is also provided a method of counting the amount of tape run in a video signal recording and/or reproducing apparatus, the method comprising:

a) producing an envelope signal of a reproduced frequency-modulated signal derived from at least one rotary head mounted on a rotary drum of said apparatus;
b) generating a pulse signal in dependence on the level of the envelope signal produced in the step (a);
c) counting the number of revolutions per unit time of the rotary head;
d) correcting a count value derived in the step (c) on the basis of the pulse signal generated in the step (b) in dependence on the relationship between the tape speed in a respective playback mode and a normal tape speed, so that the amount of tape run is counted.

The invention will now be described by way of example with reference to the accompanying drawings, throughout which like parts are referred to by like references, and in which:

Figure 1 is a block circuit diagram of an embodiment of tape counter according to the present invention;

Figure 2 is an explanatory view of tape tracks over which a rotary head scans during the reproduction of a tape at three times the normal tape speed;

Figures 3A to 3C are timing charts of pulses derived by the scanning of rotary heads over the tape tracks during the reproduction of the tape at three times the normal tape speed;

Figure 4 is an explanatory view of tape tracks over which rotary heads scan during the reproduction of the tape at four times the normal tape speed;

Figures 5A to 5C are timing charts of pulses derived by the scanning of rotary heads over the tape tracks during the reproduction of the tape at four times the normal tape speed;

Figure 6 is an explanatory view of tape tracks over which rotary heads scan during the reproduction of the tape at three times the normal tape speed in the reverse direction; and

Figures 7A to 7C are timing charts of pulses derived by the scanning of the rotary heads over the tape tracks during the reproduction of the tape at three times the normal tape speed in the reverse direction.

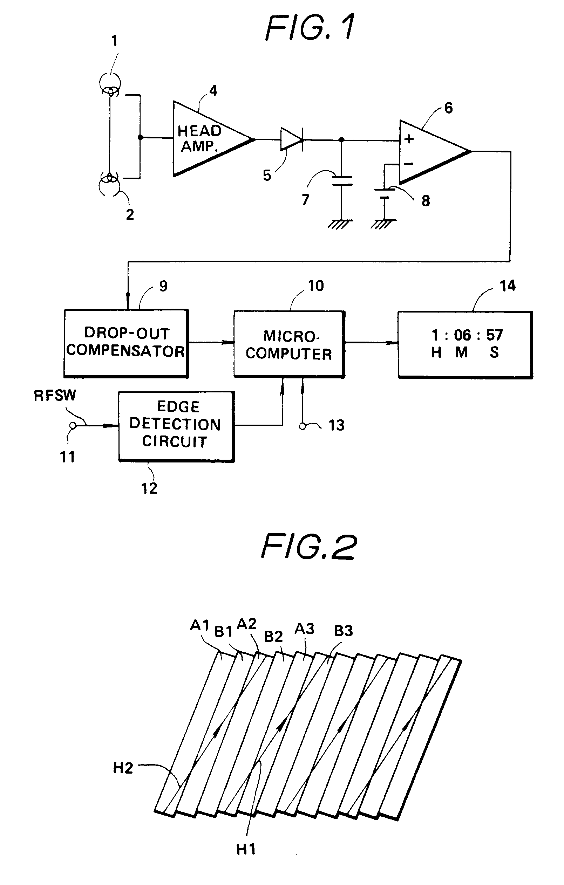

In Figure 1, a pair of rotary heads 1 and 2 are mounted on a rotary drum (not shown) of a VTR with an angular spacing of $180°$. The drum is usually rotated at the frame rate of a television system, for example, 25 or 30 rotations per second depending on the system, so as to be synchronized with the field frequency. A magnetic tape is wound obliquely on the drum through a wrap angle greater than $180°$. The magnetic gaps in the rotary heads 1 and 2 extend at different angles so that oblique azimuth recording is carried out. Output signals derived from the rotary heads 1 and 2 are supplied to a rotary transformer and a switch (not shown) to form a one-channel reproduced signal. The reproduced signal is amplified by means of a head amplifier 4, the frequency modulated RF output signal from which is supplied to an envelope detector including a diode 5 and a capacitor 7. The output envelope signal of the envelope detector is supplied to one input terminal of a level comparator 6. A dc power supply 8 (reference voltage) is supplied to the other input terminal of the level comparator 6.

When the output signal level of the envelope detector exceeds a predetermined level, the level comparator 6 produces a pulse. This pulse is supplied to a drop-out compensator 9 which inserts a pulse when none is produced at the required (equal interval) position of time from the level comparator 6. A pulse train as the output signal of the drop-out compensator 9 is supplied to a microcomputer 10 for calculating the amount of tape run.

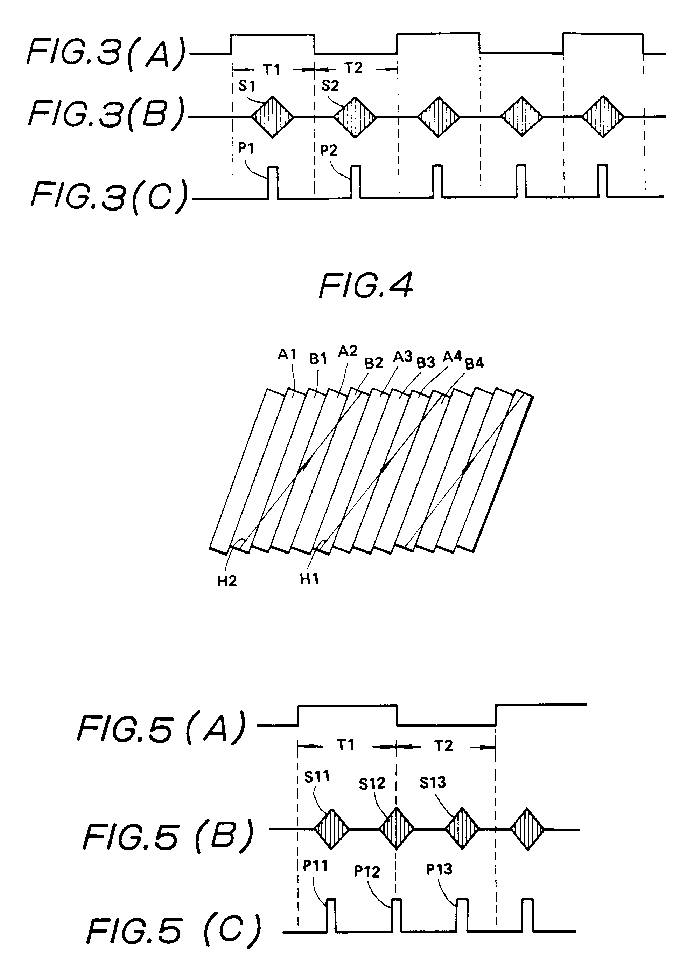

In addition, an RF switching signal having a period corresponding to one revolution of the drum (Figure 3A) received via an input terminal 11 from an RF switching signal generator of the VTR is supplied to an edge detector 12. The edge detector 12 detects a rising edge (or falling edge) of the RF switching signal. A rotation pulse signal is produced whenever the drum makes one revolution, and is supplied to the microcomputer 10. Furthermore, a mode signal such as a playback mode, fast forward mode, and so on is transmitted to the microcomputer 10 via a mode signal input terminal 13. The microcomputer 10 usually includes a central processing unit, a read only memory, a random access memory and an input/output interface. The microcomputer 10 determines from the mode signal whether the tape speed at the time of reproduction is faster or slower than that of normal reproduction (that is to say, the tape speed equal to that at the time of recording). The microcomputer 10 calculates the amount of tape run. The contents of a display expressed in units of hours, minutes and seconds in a display unit 14 is thus varied according to the calculated amount of tape run.

The detection and display of the amount of tape run in the preferred embodiment will be described with reference to Figures 2 and 3 when the tape speed of the VTR is three times the normal tape speed.

As shown in Figure 2, tracks A1, A2, A3, A4, ... recorded with an A azimuth and tracks B1, B2, B3, B4, ... recorded with a B azimuth are alternately arranged on the tape. The rotary heads 1 and 2 obliquely contact the tape. For example, as the drum rotates half a revolution during an interval T1, the rotary head 2 scans tracks A1, B1 and A2 in a scanning locus H2. In addition, during the subsequent half revolution interval T2 of the drum, the rotary head 1 scans the tracks B2, A3 and B3 in a scanning locus H1.

During the interval T1 of the RF switching signal shown in Figure 3A, the rotary head 2 scans the track B1. At this time, the azimuths of the rotary head 2 and of the track B1 match. (The azimuth of the rotary head does not match those of the other tracks A1 and A2 which are also scanned.) An RF signal S1 having a predetermined level is therefore simultaneously produced, and the diode 5 of the envelope detector produces the envelope signal of the RF signal S1. When the level of the envelope signal exceeds the signal reference level, a pulse P1 is produced as the output signal of the level comparator 6 as shown in Figure 3C. In addition, during the subsequent interval T2, the rotary head 1 scans the track A3. At this time, the azimuths of the rotary head 1 and of the track A3 match. The RF signal S2 having the predetermined level is therefore produced, and the envelope signal of the RF signal S2 is produced. When the signal level of the envelope signal exceeds the signal reference level, the level comparator 6 produces a pulse P2. The pulses P1 and P2 are transmitted via the drop-out compensator 9 to the microcomputer 10.

On the other hand, the RF switching signal (Figure 3A) is transmitted to the edge detection circuit 12. A rotary pulse signal is formed, for example, whenever the RF switching signal rises. The level of the RF switching signal is reversed whenever the drum completes a half revolution. The rotary pulse signal derived by the edge detection circuit 12 is also supplied to the microcomputer 10. In addition, the mode signal is supplied to the microcomputer 10 via the mode signal input terminal 13. The microcomputer 10 determines from the input mode signal that the tape speed is faster than the normal tape speed in the playback mode.

Since the microcomputer 10 receives the pulses P1 and P2 (b = 2) in the interval during which the drum makes one revolution (a = 1), the amount c of tape run (the number of frames) can be derived from the expression:

$$c = a + b = 1 + 2 = 3$$

Since it takes (say) 1/30 second for the drum to make one revolution, the amount of tape run is converted to time expressed in hours, minutes and seconds by multiplying the number of frames c derived as described above by 1/30 second.

The display unit 14 then displays the amount of tape run calculated by the microcomputer 10. For example, in the triple speed reproduction mode, the display unit 14 increments the display contents by one second for every ten revolutions of the drum. Thereafter, one pulse is derived from the drop-out compensator 9 whenever the drum makes a half revolution, and the amount of tape run is counted.

Figure 4 shows the scanning loci of the rotary heads 1 and 2 when the tape speed is four times the normal playback speed in the forward direction. During the half revolution interval T1 of the drum corresponding to the RF switching signal shown in Figure 5A, the rotary head 2 scans the tracks A1, B1, A2 and B2 in the scanning locus H2.

The RF signal S11 is produced as shown in Figure 5B when the rotary head 2 scans the track B1 during the interval T1. A pulse P11 is produced from the level comparator 6 as shown in Figure 5C when the envelope signal of the RF signal S11 exceeds the reference signal level. When the rotary head 2 scans the track B2, the RF signal S12 is produced. When the envelope of the RF signal S12 exceeds the reference signal level, a pulse P12 is produced from the level comparator 6. During the subsequent interval T2, the rotary head 1 scans the track A3. At this time, the envelope of the RF signal exceeds the reference signal level. Hence, when the rotary head 2 scans the track A3, the RF signal S12 is contiguously produced. A pulse P12 is produced as the output signal of the level comparator 6 when the envelope of the RF signal 12 exceeds the reference signal level.

Moreover, when the rotary head 1 scans the track A4, the RF signal S13 is produced. When the envelope output of the RF signal S13 exceeds the reference signal level, a pulse P13 is produced from the level comparator 6.

Three pulses P11, P12 and P13 are thus produced from the level changes of the RF signals detected from the rotary heads 1 and 2 during one revolution of the rotary drum. These pulses are transmitted to the microcomputer 10 via the drop-out compensator 9. The number of pulses are counted. The edge detection circuit 12 detects the rising edge of the RF switching signal. The rotary pulse signal corresponding to the rising edge of the RF switching signal is also transmitted to the microcomputer 10.

In addition, when the mode signal is transmitted to the microcomputer 10 via the mode signal input terminal 13, the microcomputer 10 determines that the tape speed is faster than the normal playback speed. Then, the microcomputer 10 selects a calculation for the amount c of tape run:

$$c = a + b$$

Therefore, in this case:

$$c = a + b = 1 + 3 = 4$$

during the intervals (T1 + T2), since the pulses P11, P12 and P13 (b = 3) are produced during one revolution (a = 1) of the drum. The microcomputer 10 multiplies the number of frames c derived in the way described above by (say) 1/30 second to obtain the time in hours, minutes and seconds. That is to say, c x (1/30) = 4/30 second. In this way, 4/30 second is counted as the amount by which the tape has run. Such a counting procedure as described above is carried out whenever the drum makes one revolution. If this continues, the display contents of the display unit 14 is incremented by four seconds for each thirty revolutions of the drum (during one second).

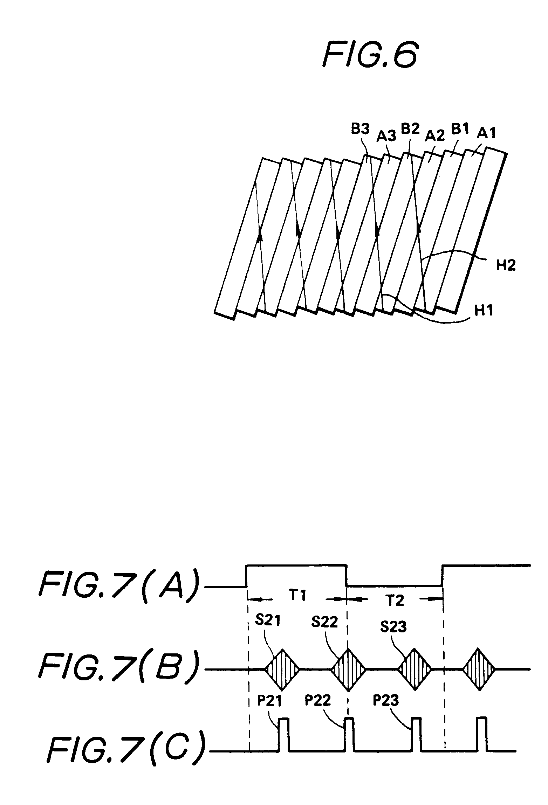

Figure 6 shows the scanning loci of the rotary heads in a reverse mode, for example, when the tape runs at three times the normal tape speed in the reverse direction.

During the half revolution interval T1 of the drum, the rotary head 2 scans the tracks A1, B1, A2 and B2 in a scanning locus H2. During the subsequent half revolution interval T2 of the drum, the rotary head 1 scans the tracks A2, B2, A3 and B3 in a scanning locus H1.

During the interval T1 specified by the RF switching signal shown in Figure 7A, the azimuth of the rotary head 2 coincides with that of the track B1 when the rotary head 2 scans the track B1. The RF signal S21 is produced as shown in Figure 7B. The pulse P21 is produced from the level comparator 6, as shown in Figure 7C. When the azimuth of the rotary head 1 coincides with that of the track A2 and the azimuth of the rotary head 2 coincides with that of the track B2, the RF signal S22 is produced. Consequently, a pulse P22 is produced from the level comparator 6. In addition, when the rotary head 1 scans the track A3, the azimuth of the rotary head 1 coincides with that of the track A3 and the RF signal S23 is produced. A pulse P23 is thus produced from the level comparator 6.

In the way described above, the pulses P21, P22, P23, ... are produced and are supplied to the microcomputer 10 sequentially via the drop-out compensator 9.

In addition, when the mode signal is supplied to the microcomputer 10 via the mode signal input terminal 13, the microcomputer 10 determines that the tape speed is slower than the normal tape speed in the normal playback mode with regard to the normal tape running direction (that is, faster than the normal tape speed in the reverse direction in the reverse playback mode). In this case, since the tape runs in the reverse direction and a pulse for one track is increased, the microcomputer 10 selects the expression:

$$c = a - b$$

for calculating the amount of tape run.

Since the pulses P21, P22 and P23 (b = 3) are produced during the interval of one revolution (a = 1) of the drum to which the interval T1 and interval T2 are added, the number of frames c by which the tape has run is counted as:

c = 1 - 3 = -2

Consequently, the tape has run two frames in the opposite direction during one revolution of the drum.

In this way, the number of frames, that is, the amount of tape by which the tape has run is converted into time and is displayed by the display unit 14 in hours, minutes and seconds.

In a still image playback mode, the counting of the number of pulses by the microcomputer 10 is stopped. At this time, the display of the amount of tape run is held and displayed unchanged.

Although in the above-described embodiment the tape is azimuth recorded, and the tape run is displayed, it is also possible to display the amount of tape run by counting the number of times by which the rotary heads transverse guard bands from attenuations of the RF signal level in the case of a tape on which a guard band is present between adjacent tracks.

Embodiments of tape counter according to the present invention can detect the amount of tape run with a high accuracy and can display the amount of tape run in units of hours, minutes and seconds. Moreover, the amount of tape run can be displayed in all playback modes by the change of the calculation equations according to the playback mode.

**Claims**

1. A tape counter for counting the amount of tape run in a video signal recording and/or reproducing apparatus having different playback modes, the tape counter comprising:
   an envelope detector (5, 7) for producing an envelope signal of a reproduced frequency modulated signal derived from at least one rotary head (1, 2) mounted on a rotary drum of said apparatus;
   a pulse signal generator (6) for generating a pulse signal in dependence on the level of the envelope signal produced by said envelope detector (5, 7);
   first means (11, 12, 10) for counting the number of revolutions per unit time of the rotary head (1, 2) on the basis of an RF switching signal derived by said apparatus; and
   second means (13, 10) for correcting a count value derived by said first means (11, 12, 10) on the basis of the pulse signal generated by said pulse signal generator (6) in dependence on the relationsip between the tape speed in a respective playback mode and a normal tape speed, so that the amount of tape run is counted.

2. A tape counter according to claim 1 further comprising third means (14) for displaying the count value corrected by said second means (13, 10) in units of hours, minutes and seconds.

3. A tape counter according to claim 1 wherein said first means (11, 12, 10) counts the number of revolutions per unit time of the rotary head (1, 2) as twenty-five or thirty revolutions per second.

4. A tape counter according to claim 3 wherein said second means (11, 12, 10) multiplies a sum generated by adding one to the number of pulses in the pulse signal generated by said pulse signal generator (6) during one revolution of the rotary drum by the time in seconds per revolution of the rotary drum, when the tape speed is faster than the normal tape speed in the forward direction in the playback mode.

5. A tape counter according to claim 3 wherein said second means (11, 12, 10) multiplies a difference generated by subtracting one from the number of pulses in the pulse signal generated by said pulse signal generator (6) during one revolution of the rotary drum by the time in seconds per revolution of the drum, when the tape speed is faster than the normal tape speed in a reverse direction.

6. A tape counter according to claim 2 wherein said third means (14) displays and holds the same contents of display when the tape is stopped in a still playback mode.

7. A tape counter according to claim 1 wherein the normal tape speed in the playback mode is the same as that in a recording mode.

8. A method of counting the amount of tape run in a video signal recording and/or reproducing apparatus, the method comprising:
   a) producing an envelope signal of a reproduced frequency-modulated signal derived from at least one rotary head (1, 2) mounted on a rotary drum of said apparatus;
   b) generating a pulse signal in dependence on the level of the envelope signal produced in the step (a);
   c) counting the number of revolutions per unit time of the rotary head;

d) correcting a count value derived in the step (c) on the basis of the pulse signal generated in the step (b) in dependence on the relationship between the tape speed in a playback mode and a normal tape speed, so that the amount of tape run is counted.

9. A method according to claim 8 wherein the step (d) comprises the steps of:

e) deriving the number of frames on tape tracks over which the rotary head (1, 2) has scanned during one revolution of the rotary drum; and

(f) multiplying the number of frames derived in the step (e) by a time for the rotary drum to make one revolution derived in the step (c), so that the amount of tape run is counted.

10. A method according to claim 9 which further comprises the steps of:

(g) displaying the amount of tape run derived in the step (f) in units of hours, minutes and seconds.

**Revendications**

1. Compteur d'avancement de bande pour compter la valeur d'avancement de bande dans un appareil d'enregistrement et/ou de reproduction de signal vidéo ayant différents modes de lecture, le compteur d'avancement de bande comprenant :

un détecteur d'enveloppe (5, 7) pour produire un signal d'enveloppe d'un signal modulé en fréquence reproduit qui est dérive d'au moins une tête rotative (1, 2) montée sur un tambour rotatif dudit appareil ;

un générateur de signal d'impulsion (6) pour générer un signal d'impulsion en fonction du niveau du signal d'enveloppe produit par ledit détecteur d'enveloppe (5, 7) ;

un premier moyen (11, 12, 10) pour compter le nombre de révolutions par unité de temps de la tête rotative (1, 2) sur la base d'un signal de commutation radio-fréquence (RF) dérivé par ledit appareil ; et

un second moyen (13, 10) pour corriger une valeur de comptage dérivée par ledit premier moyen (11, 12, 10) sur la base du signal d'impulsion généré par ledit générateur de signal d'impulsion (6) en fonction de la relation entre la vitesse de la bande dans un mode de lecture respectif et une vitesse de bande normale de telle sorte que la valeur d'avancement de la bande soit comptée.

2. Compteur d'avancement de bande selon la revendication 1, comprenant en outre un troisième moyen (14) pour afficher la valeur comptée corrigée par ledit second moyen (13, 10) en heures, minutes et secondes.

3. Compteur d'avancement de bande selon la revendication 1, dans lequel ledit premier moyen (11, 12, 10) compte le nombre de révolutions par unité de temps de la tête rotative (1, 2) comme étant égal à vingt cinq ou trente révolutions par seconde.

4. Compteur d'avancement de bande selon la revendication 3, dans lequel ledit second moyen (11, 12, 10) multiplie une somme générée en additionnant le chiffre 1 au nombre d'impulsions dans le signal d'impulsion généré par ledit générateur de signal d'impulsion (6) pendant une révolution du tambour rotatif par le temps exprimé en secondes par révolution du tambour rotatif lorsque la vitesse de la bande est supérieure à la vitesse de bande normale suivant la direction avant dans le mode lecture.

5. Compteur d'avancement de bande selon la revendication 3, dans lequel ledit second moyen (11, 12, 10) multiplie une différence générée en soustrayant le chiffre 1 du nombre d'impulsions dans le signal d'impulsion généré par ledit générateur de signal d'impulsion (6) pendant une révolution du tambour rotatif par le temps exprimé en secondes par révolution du tambour lorsque la vitesse de la bande est supérieure à la vitesse de bande normale selon une direction inverse.

6. Compteur d'avancement de bande selon la revendication 2, dans lequel ledit troisième moyen (14) affiche et maintient les mêmes contenus d'affichage lorsque la bande est arrêtée dans encore un mode de lecture.

7. Compteur d'avancement de bande selon la revendication 1, dans lequel la vitesse de bande normale dans le mode lecture est la même que dans le mode enregistrement.

8. Procédé de comptage de la valeur d'avancement d'une bande dans un appareil d'enregistrement et/ou de reproduction de signal vidéo, le procédé comprenant :

a) la production d'un signal d'enveloppe d'un signal modulé en fréquence reproduit qui est dérivé d'au moins une tête rotative (1, 2) montée sur un tambour rotatif dudit appareil ;

b) la génération d'un signal d'impulsion en fonction du niveau du signal d'enveloppe produit au niveau de l'étape (a) ;

c) le comptage du nombre de révolutions par unité de temps de la tête rotative ;

d) la correction d'une valeur de comptage dérivée au niveau de l'étape (c) sur la base du signal d'impulsion généré au niveau de l'étape (b) en fonction de la relation entre la vitesse de la bande dans un mode de lecture respectif et une vitesse de bande normale de telle sorte que la valeur d'avancement de la bande soit comptée.

9. Procédé selon la revendication 8, dans lequel l'étape (d) comprend les étapes de :

e) dérivation du nombre d'images sur des pistes de bande sur lesquelles la tête rotative (1, 2) a effectué un balayage pendant une révolution du tambour rotatif ; et

f) multiplication du nombre d'images dérivées dans l'étape (e) par un temps nécessaire au tambour rotatif pour effectuer une révolution, ce temps étant dérivé dans l'étape (c) de telle sorte que la valeur d'avancement de la bande soit comptée.

10. Procédé selon la revendication 9, comprenant en outre les étapes de :

g) affichage de la valeur d'avancement de la bande dérivée dans l'étape (f) en heures, minutes et secondes.

**Patentansprüche**

1. Bandzähler zum Zählen des Banddurchlaufs in einem Aufnahme-und/oder Wiedergabegerät für Videosignale mit unterschiedlichen Wiedergabe-Betriebsarten, wobei der Bandzähler aufweist:

einen Hüllkurvendetektor (5, 6) zur Erzeugung eines Hüllkurvensignals eines reproduzierten frequenzmodulierten Signals, das von wenigstens einem auf einer rotierenden Trommel des Geräts montierten rotierenden Kopf (1, 2) gewonnen wird,

einem Impulssignalgenerator (6) zur Erzeugung eines Impulssignals in Abhängigkeit von dem Pegel des von dem Hüllkurvendetektor (5, 7) erzeugten Hüllkurvensignals,

einer ersten Einrichtung (11, 12, 10) zum Zählen der Anzahl der Umdrehungen des rotierenden Kopfes (1, 2) pro Zeiteinheit auf der Basis eines von dem Gerät abgeleiteten Hochfrequenzschaltsignals und

einer zweites Einrichtung (13, 10) zum Korrigieren des von der ersten Einrichtung (11, 12, 10) gewonnenen Zählwerts auf der Basis des von dem Impulssignalgenerator (6) erzeugten Impulssignals in Abhängigkeit von dem Verhältnis der Bandgeschwindigkeit in der jeweiligen Wiedergabe-Betriebsart zu einer normalen Bandgeschwindigkeit, so daß die Größe des Banddurchlaufs gezählt wird.

2. Bandlängenzähler nach Anspruch 1, mit einer dritten Einrichtung (14) zur Anzeige des von den zweiten Mitteln (13, 10) korrigierten Zählwerts in Stunden, Minuten und Sekunden.

3. Bandlängenzähler nach Anspruch 1, bei dem die erste Einrichtung (11, 12, 10) die Anzahl der Umdrehungen des rotierenden Kopfes (1, 2) pro Zeiteinheit in 25 oder 30 Umdrehungen pro Sekunde zählt.

4. Bandlängenzähler nach Anspruch 3, bei dem die zweite Einrichtung (11, 12, 10) eine Summe, die erzeugt wird durch Addieren der Zahl Eins zur Anzahl der Impulse in dem während einer Umdrehung der rotierenden Trommel von dem Impulssignalgenerator (6) erzeugten Impulssignal, mit der in Sekunden angegebenen Zeit pro Umdrehung der rotierenden Trommel multipliziert, wenn die Bandgeschwindigkeit in Vorwärtsrichtung größer ist als die normale Bandgeschwindigkeit in der Wiedergabe-Betriebsart.

5. Bandlängenzähler nach Anspruch 3, bei der die zweite Einrichtung (11, 12, 10) die durch Subtraktion der Zahl Eins von der Anzahl der Impulse in dem während einer Umdrehung der rotierenden Trommel von dem Impulssignalgenerator (6) erzeugten Impulssignal erzeugte Differenz mit der in Sekunden angegebenen Zeit pro Umdrehung der rotierenden Trommel multipliziert, wenn die Bandgeschwindigkeit größer ist als die normale Bandgeschindigkeit in Rückwärtsrichtung.

6. Bandlängenzähler nach Anspruch 2, bei dem die dritte Einrichtung (14) denselben Anzeigeinhalt wiedergibt und festhält, wenn das Band bei der Standbildwiedergabe angehalten wird.

7. Bandlängenzähler nach Anspruch 1, bei dem die normale Bandgeschwindigkeit in der Wiedergabe-Betriebsart dieselbe ist wie in der Aufnahme-Betriebsart.

8. Verfahren zum Zählen des Banddurchlaufs in einem Aufnahme-und/oder Wiedergabegerät für Videosignale mit den Verfahrensschritten:

(a) Erzeugen eines Hüllkurvensignals eines reproduzierten frequenzmodulierten Signals, das von wenigstens einem auf einer rotierenden Trommel des Geräts montierten rotierenden Kopf (1, 2) abgeleitet wird,

(b) Erzeugen eines Impulssignals in Abhängigkeit von dem Pegel des in dem Schritt (a) erzeugten Hüllkurvensignals,

(c) Zählen der Anzahl der Umdrehungen des rotierenden Kopfes (1, 2) pro Zeiteinheit,

(d) Korrigieren des in dem Schritt (c) gewonnenen Zählwerts auf der Basis des in dem Schritt (b) erzeugten Impulssignals in Abhängigkeit von dem Verhältnis der Bandgeschwindigkeit in einer Wiedergabe-Betriebsart zu einer normalen Bandgeschwindigkeit, so daß die Größe des Banddurchlaufs gezählt wird.

9. Verfahren nach Anspruch 8, bei dem der Schritt (d) folgende Schritte umfaßt:

(e) Ableiten der Anzahl von Vollbildern auf den von dem rotierenden Kopf (1, 2) während einer Umdrehung der rotierenden Trommel abgetasteten Bandspuren,

(f) Multiplizieren der in dem Schritt (e) gewonnenen Anzahl von Vollbildern mit der in dem Schritt (c) ermittelten Zeit, die die rotierende Trommel für eine Umdrehung benötigt, so daß die Banddurchlaufmenge gezählt wird.

10. Verfahren nach Anspruch 9, mit dem weiteren Verfahrensschritt:

(g) Anzeigen der in dem Schritt (f) gewonnenen Größe des Banddurchlaufs in Stunden, Minuten und Sekunden.

# FIG. 1

# FIG.2

FIG.3(A)

FIG.3(B)

FIG.3(C)

T1 · T2
S1 · S2
P1 · P2

FIG.4

A1 B1 A2 B2 A3 B3 A4 B4

H2 · H1

FIG.5 (A)

FIG.5 (B)

FIG.5 (C)

T1 · T2
S11 · S12 · S13
P11 · P12 · P13

## FIG.6

## FIG.7(A)

## FIG.7(B)

## FIG.7(C)